# EUROPÄISCHE PATENTSCHRIFT

(11) **EP 1 845 577 B1**
(45) Veröffentlichungstag und Bekanntmachung des Hinweises auf die Patenterteilung: **05.10.2011**
(21) Anmeldenummer: 07104983.7
(22) Anmeldetag: 27.03.2007
(51) Int. Cl.: H01M 8/04, H01M 8/06, H01M 8/24

(54) **Brennstoffzellensystem**
Fuel cell system
Système de pile à combustible

(30) Priorität: 12.04.2006 DE 102006017618
(43) Veröffentlichungstag der Anmeldung: 17.10.2007
(73) Patentinhaber: J. Eberspächer GmbH & Co. KG, 73730 Esslingen (DE)
(72) Erfinder: Kaupert, Andreas, 73730, Esslingen (DE); Reiners, Karsten, 73732, Esslingen (DE)
(74) Vertreter: BRP Renaud & Partner

(56) Entgegenhaltungen:
- EP-A- 1 465 274
- EP-A- 1 557 896
- FR-A- 1 553 361
- US-B1- 6 608 463

## Beschreibung

Die vorliegende Erfindung betrifft ein Brennstoffzellensystem, insbesondere für ein Kraftfahrzeug, mit den Merkmalen des Oberbegriffs des Anspruchs 1.

Ein derartiges Brennstoffzellensystem ist zum Beispiel aus der US 6,608,463 B1 bekannt und umfasst eine Brennstoffzelle zur Stromerzeugung aus Brenngas und Oxidatorgas, wozu in der Regel Luft oder Sauerstoff verwendet wird. Die Brennstoffzelle weist einen Anodeneingang, einen Kathodeneingang, einen Anodenausgang, einen Kathodenausgang und zumindest einen Stromanschluss auf. Das Brennstoffzellensystem umfasst außerdem einen Reformer zur Brenngaserzeugung aus Kraftstoff und Oxidatorgas, der einen Kraftstoffeingang, einen Oxidatoreingang und einen Brenngasausgang aufweist. Eine erste Oxidatorleitung dient zur Versorgung der Brennstoffzelle mit Oxidatorgas und ist hierzu mit dem Kathodeneingang der Brennstoffzelle verbunden. Eine zweite Oxidatorleitung dient zur Versorgung des Reformers mit Oxidatorgas und ist hierzu mit dem Oxidatoreingang des Reformers verbunden. Des weiteren ist eine Brennstoffzellenabgasleitung vorgesehen, die eingangsseitig an eine mit dem Anodenausgang der Brennstoffzelle verbundene Anodenabgasleitung und an eine mit dem Kathodenausgang der Brennstoffzelle verbundene Kathodenabgasleitung angeschlossen ist. Das bekannte Brennstoffzellensystem umfasst außerdem einen Restgasbrenner zum Verbrennen eines Gemischs aus Anodenabgas und Kathodenabgas, der in der Brennstoffzellenabgasleitung, also stromab der Anodenabgasleitung und stromab der Kathodenabgasleitung angeordnet ist. Mit Hilfe eines ersten Wärmeübertragers, der einerseits in die Brennstoffzellenabgasleitung stromab des Restgasbrenners und andererseits in die erste Oxidatorleitung eingebunden ist, wird der Brennstoffzellenabgasstrom mit dem der Brennstoffzelle zugeführten Oxidatorstrom wärmeübertragend gekoppelt. Beim bekannten Brennstoffzellensystem kann außerdem ein zweiter Wärmeübertrager vorgesehen sein, der einerseits in die Brennstoffzellenabgasleitung und andererseits in die zweite Oxidatorleitung eingebunden ist. Dabei ist dieser zweite Wärmeübertrager stromab des ersten Wärmeübertragers in der Brennstoffzellenabgasleitung angeordnet.

Ein ähnliches Brennstoffzellensystem ist aus der DE 10 2005 001 361 bekannt, bei dem der zweite Wärmeübertrager einerseits in die Brennstoffzellenabgasleitung stromab des ersten Wärmeübertragers und andererseits in eine Kühlmittelleitung eines Kühlkreises einer Brennkraftmaschine des Kraftfahrzeugs eingebunden ist, um auf diese Weise den Brennstoffzellenabgasstrom mit dem Kühlmittelstrom wärmeübertragend zu koppeln.

Aus der EP 1 557 896 A1 ist ein Brennstoffzellensystem mit einer Anodenabgasrückführung zu einem Reformer bekannt. Dabei enthält eine Rezirkulationsleitung einen Rezirkulationswärmeübertrager, in den auch eine Oxidatorleitung eingebunden ist, die der Brennstoffzelle über einen Wärmeübertrager Luft zuführt. Dieser Wärmeübertrager ist dabei außerdem in eine Abgasleitung eingebunden, die von einem Restgasbrenner stammt.

Weitere Brennstoffzellensysteme sind beispielsweise aus der EP 1 465 274 A, aus der FR 1 553,361, aus der DE 103 15 255 A1 und aus der DE 10 2004 002 337 A1 bekannt.

Die vorliegende Erfindung beschäftigt sich mit dem Problem, für ein Brennstoffzellensystem der eingangs genannten Art eine verbesserte Ausführungsform anzugeben, die sich insbesondere durch ein verbessertes Betriebsverhalten auszeichnet, was beispielsweise zu einer verlängerten Lebenszeit des Brennstoffzellensystems oder einzelner Komponenten des Brennstoffzellensystems führen kann.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die im Abgas der Brennstoffzelle enthaltene Energie möglichst weitgehend auszunutzen. Hierzu werden die Brennstoffzellenabgase im Restgasbrenner verbrannt und dadurch in Wärme umgewandelt. Ein Teil dieser Wärme wird über den ersten Wärmeübertrager entnommen. Mit dem stromab des ersten Wärmeübertragers angeordneten zweiten Wärmeübertrager kann dem Brennstoffzellenabgas zusätzlich weitere Wärme entzogen werden. Erfindungsgemäß wird die dem Brennstoffzellenabgas zusätzlich entzogene Wärme zum Vorwärmen des dem Reformer zugeführten Oxidatorstroms verwendet. Hierdurch lässt sich die Effektivität des Reformers steigern; insbesondere wird die Gemischbildung im Reformer verbessert. Eine verbesserte Gemischbildung kann den Reformierungsprozess, der beispielsweise mittels eines Katalysators realisiert wird, homogener ausgestaltet werden, wodurch die Lebenszeit des Reformers verlängert wird. Insgesamt führt die Vorwärmung des dem Reformer zugeführten Oxidatorstroms zu einem effizienteren Prozessablauf innerhalb des Brennstoffzellensystems. Schließlich kann mit Hilfe des Rezirkulationswärmeübertragers auch dem Anodenabgas, das dem Reformer rückgeführt wird, Wärme entzogen werden, um den Oxidatorstrom, der dem Reformer oder der Brennstoffzelle zugeführt wird, vorzuheizen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

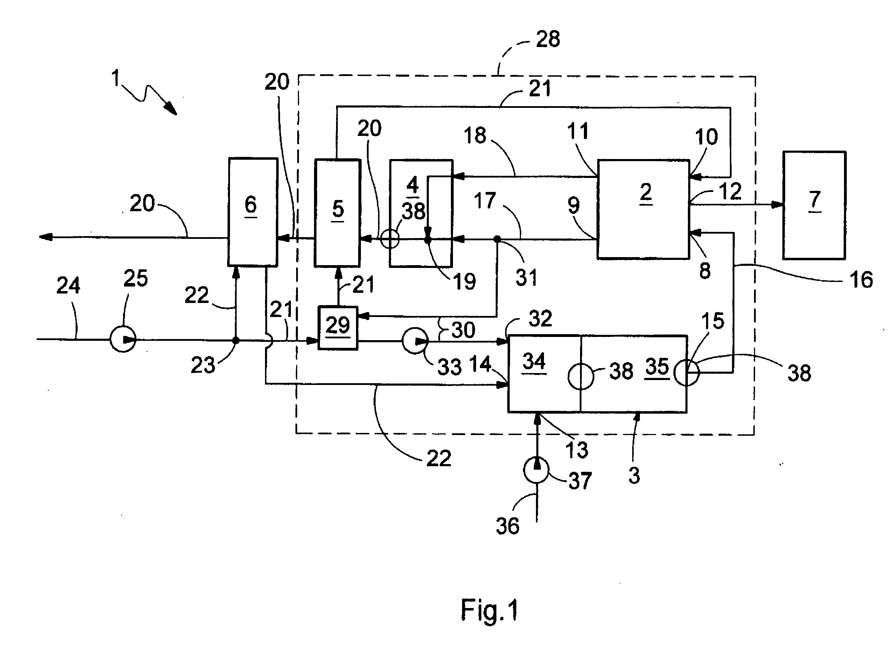

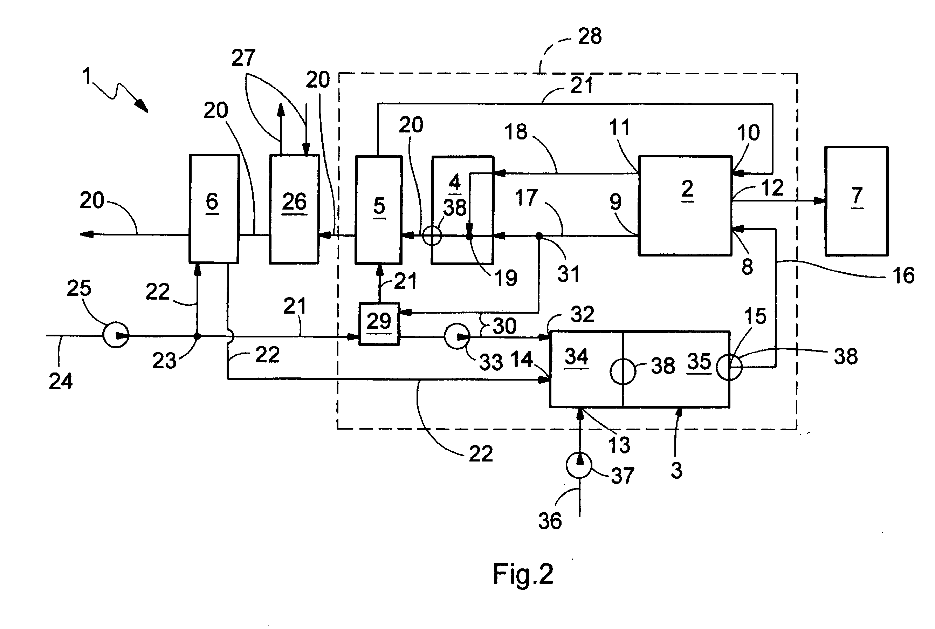

- Fig. 1 und 2: jeweils eine schaltplanartige, stark verein- fachte Prinzipdarstellung eines Brennstoff- zellensystems bei verschiedenen Ausführungs- formen.

Entsprechend den Fig. 1 und 2 umfasst ein Brennstoffzellensystem 1, das zum Beispiel in einem Kraftfahrzeug angeordnet sein kann, eine Brennstoffzelle 2, einen Reformer 3, einen Restgasbrenner 4, einen ersten Wärmeübertrager 5 und einen zweiten Wärmeübertrager 6.

Die Brennstoffzelle 2 kann beispielsweise als Festkörperbrennstoffzelle (SOFC) und insbesondere als Hochtemperatur-Brennstoffzelle ausgestaltet sein. Sie dient zur Stromerzeugung, um damit beispielsweise zumindest einen elektrischen Verbraucher 7 des Kraftfahrzeugs mit Strom zu versorgen. Bei diesen elektrischen Verbrauchern 7 handelt es sich vorzugsweise um solche Verbraucher 7, die für den eigentlichen Betrieb des Fahrzeugs nicht erforderlich sind, sondern im wesentlichen zur Komfortsteigerung des Fahrzeugführers dienen, vor allem dann, wenn das Fahrzeug selbst ruht. Beispielsweise handelt es sich beim elektrischen Verbraucher 7 um eine Klimaanlage, um ein Fernsehgerät, um eine Kochstelle, um einen Mikrowellenherd, um einen Kühlschrank oder um das Brennstoffzellensystem 1 selbst.

Die Brennstoffzelle 2 stellt im Betrieb in bekannter Weise den Strom aus einem anodenseitig zugeführten Brenngas und einem kathodenseitig zugeführten Oxidatorgas her. Beim Oxidatorgas handelt es sich üblicherweise um Luft oder um reinen Sauerstoff. Beim Brenngas handelt es sich um ein vom Reformer 3 hergestelltes wasserstoffhaltiges Reformatgas oder Synthesegas. Die Brennstoffzelle 2 weist einen Anodeneingang 8, einen Anodenausgang 9, einen Kathodeneingang 10, einen Kathodenausgang 11 und zur Stromversorgung des wenigstens einen Verbrauchers 7 zumindest einen Stromanschluss 12 auf, der mit dem wenigstens einen Verbraucher 7 verbunden ist.

Der Reformer 3 dient zur Erzeugung des Brenngases aus Kraftstoff und aus Oxidatorgas. Als Oxidatorgas wird auch hier vorzugsweise Luft beziehungsweise reiner Sauerstoff verwendet. Als Kraftstoff wird vorzugsweise der in einem mit dem Brennstoffzellensystem 1 ausgestatteten Fahrzeug zum Betreiben einer Brennkraftmaschine ohnehin vorhandene Kraftstoff verwendet, also vorzugsweise Benzin oder Diesel oder ein anderer Kohlenwasserstoff. Der Reformer 3 weist einen Kraftstoffeingang 13, einen Oxidatoreingang 14 und einen Brenngasausgang 15 auf. Der Brenngasausgang 15 ist über eine Brenngasleitung 16 mit dem Anodeneingang 8 verbunden.

An den Anodenausgang 9 ist eine Anodenabgasleitung 17 angeschlossen, die Anodenabgas von der Brennstoffzelle 2 abführt. An den Kathodenausgang 11 ist eine Kathodenabgasleitung 18 angeschlossen, die Kathodenabgas von der Brennstoffzelle 2 wegführt. Die Kathodenabgasleitung 18 ist bei 19 an die Anodenabgasleitung 17 angeschlossen beziehungsweise mit dieser zusammengeführt. Ab dieser Anschlussstelle 19 bildet die Anodenabgasleitung 17 zusammen mit der Kathodenabgasleitung 18 eine Brennstoffzellenabgasleitung 20. Diese ist demnach über die Anodenabgasleitung 17 mit dem Anodenausgang 9 und über die Kathodenabgasleitung 18 mit dem Kathodenausgang 11 verbunden. Die Anschlussstelle 19 ist dabei innerhalb des Restgasbrenners 4 angeordnet, das bedeutet, dass die Abgasleitungen 17, 18 und 20 an den Restgasbrenner 4 angeschlossen sind. Der Restgasbrenner 4 dient zum Verbrennen eines Gemischs aus Anodenabgas und Kathodenabgas.

Die Versorgung der Brennstoffzelle 2 mit Oxidatorgas erfolgt mit Hilfe einer ersten Oxidatorleitung 21, die an den Kathodeneingang 10 angeschlossen ist. Die Versorgung des Reformers 3 mit Oxidatorgas erfolgt mittels einer zweiten Oxidatorleitung 22, die an den Oxidatoreingang 14 angeschlossen ist. Beide Oxidatorleitungen 21, 22 zweigen bei 23 von einer gemeinsamen Oxidatorversorgungsleitung 24 ab, in der ein Gebläse oder eine Pumpe 25 angeordnet sein kann.

Der erste Wärmeübertrager 5 ist einerseits stromab des Restgasbrenners 4 in die Brennstoffzellenabgasleitung 20 und andererseits in die erste Oxidatorleitung 21 eingebunden. Im ersten Wärmeübertrager 5 erfolgt somit eine wärmeübertragende Kopplung zwischen den Verbrennungsabgasen des Restgasbrenners 4 und dem der Brennstoffzelle 2 zugeführten Oxidatorgas.

Der zweite Wärmeübertrager 6 ist einerseits stromab des ersten Wärmeübertragers 5 in die Brennstoffzellenabgasleitung 20 und andererseits in die zweite Oxidatorleitung 22 eingebunden. Im zweiten Wärmeübertrager 6 erfolgt somit eine wärmeübertragende Kopplung zwischen den Verbrennungsabgasen des Restgasbrenners 4 und dem dem Reformer 3 zugeführten Oxidatorgas. Durch die Reihenschaltung der beiden Wärmeübertrager 5, 6 kann in Verbindung mit dem Restgasbrenner 4 dem Brennstoffzellenabgas sehr viel Energie entnommen werden, wodurch der Wirkungsgrad des Brennstoffzellensystems 1 vergleichsweise hoch ist. Gleichzeitig führt die Vorheizung des der Brennstoffzelle 2 zugeführten Oxidatorgases sowie die Vorheizung des dem Reformer 3 zugeführten Oxidatorgases zu einer Verbesserung des Brennstoffzellenprozessors, die ebenfalls in einer Wirkungsgradsteigerung resultiert.

Bei der in Fig. 2 gezeigten Ausführungsform ist das Brennstoffzellensystem 1 zusätzlich noch mit einem dritten Wärmeübertrager 26 ausgestattet, der ebenfalls in die Brennstoffzellenabgasleitung 20 ebenfalls stromab des Restgasbrenners 4 eingebunden ist. Bei der gezeigten Ausführungsform ist der dritte Wärmeübertrager 26 dabei stromauf des zweiten Wärmeübertragers 6 in der Brennstoffzellenabgasleitung 20 angeordnet. Grundsätzlich ist jedoch auch eine Ausführungsform denkbar, bei welcher der dritte Wärmeübertrager 26 stromab des zweiten Wärmeübertragers 6 in der Brennstoffzellenabgasleitung 20 angeordnet ist. Der dritte Wärmeübertrager 26 ist außerdem in einen Abwärmepfad 27 eingebunden. Dieser Abwärmepfad 27 dient ebenfalls zur Nutzung von Wärmeenergie, die im Abgas der Brennstoffzelle 2 bzw. des Restgasbrenners 4 enthalten ist. Beispielsweise handelt es sich beim Abwärmepfad 27 um eine Kühlmittelleitung eines Kühlkreises einer Brennkraftmaschine des Kraftfahrzeugs. Ebenso kann es sich beim Abwärmepfad 27 um eine Warmluftleitung einer Innenraumheizeinrichtung des Kraftfahrzeugs handeln.

Die in den Fig. 1 und 2 gezeigten Ausführungsformen zeichnen sich außerdem durch eine thermisch isolierende Isolationsbox 28 aus, die hier durch eine unterbrochene Linie angedeutet ist. Innerhalb der Isolationsbox 28 sind in jedem Fall die Brennstoffzelle 2, der Restgasbrenner 4 und der erste Wärmeübertrager 5 angeordnet. Hierbei handelt es sich um Komponenten des Brennstoffzellensystems 1, die im Betrieb relativ hohe Temperaturen erreichen. In den gezeigten Ausführungsformen ist der Reformer 3 ebenfalls innerhalb der Isolationsbox 28 angeordnet. Bei einer anderen Ausführungsform ist es durchaus möglich, den Reformer 3 außerhalb der Isolationsbox 28 anzuordnen.

Während der erste Wärmeübertrager 5 innerhalb der Isolationsbox 28 angeordnet ist, befindet sich der zweite Wärmeübertrager 6 außerhalb der Isolationsbox 28. Auch der dritte Wärmeübertrager 26 - soweit vorhanden - ist außerhalb der Isolationsbox 28 angeordnet.

Bei den hier gezeigten Ausführungsformen ist das Brennstoffzellensystem 1 außerdem mit einem Rezirkulationswärmeübertrager 29 ausgestattet, der vorzugsweise innerhalb der Isolationsbox 28 angeordnet ist. Dieser Rezirkulationswärmeübertrager 29 ist einerseits in die erste Oxidatorleitung 21 und andererseits in eine Rückführleitung 30 eingebunden. Die Rückführleitung 30 ist bei 31 an die Anodenabgasleitung 17 angeschlossen und bei 32 an den Reformer 3. Die Abzweigstelle 31 ist hier stromauf der Anschlussstelle 19 in der Anodenabgasleitung 17 angeordnet, wodurch sichergestellt ist, dass nur Anodenabgas über die Rückführleitung 30 zum Reformer 3 rückgeführt wird. Der Rezirkulationswärmeübertrager 29 führt somit zu einer wärmeübertragenden Kopplung zwischen dem dem Reformer 3 zugeführten Anodenabgas und dem der Brennstoffzelle 2 zugeführten Oxidatorgas. Insoweit wird mit Hilfe des Rezirkulationswärmeübertragers 29 eine zusätzliche Vorheizung des der Brennstoffzelle 2 zugeführten Oxidatorgases erzielt. Vorzugsweise ist der Rezirkulationswärmeübertrager 29 hierzu innerhalb der ersten Oxidatorleitung 21 stromauf des ersten Wärmeübertragers 5 angeordnet. In der Rückführleitung 30 kann zwischen dem Anodenabgaseingang 32 des Reformers 3 und dem Rezirkulationswärmeübertrager 29 eine Pumpe oder ein Gebläse 33 angeordnet sein, um das rückgeführte Anodenabgas anzutreiben.

Alternativ kann der Rezirkulationswärmeübertrager 29 auch zur Vorwärmung des dem Reformer 3 zugeführten Oxidatorgases verwendet werden. Hierzu ist der Rezirkulationswärmeübertrager 29 einerseits in die zweite Oxidatorleitung 22 und andererseits in die Rückführleitung 30 eingebunden. Dabei kann der Rezirkulationswärmeübertrager 29 in der zweiten Oxidatorleitung 22 vorzugsweise stromab des zweiten Wärmeübertragers 6 angeordnet sein.

Der Reformer 3 weist bei den hier gezeigten Ausführungsformen einen Gemischbildungsabschnitt 34 und einen Katalysatorabschnitt 35 auf. Der Gemischbildungsabschnitt 34 dient zur Bildung eines Gemischs zumindest aus Kraftstoff und aus Oxidatorgas. Gegebenenfalls enthält das Gemisch auch rückgeführtes Anodenabgas. Dementsprechend ist der Gemischbildungsabschnitt 34 mit dem Kraftstoffeingang 13, dem Oxidatoreingang 14 und dem Anodenabgaseingang 32 ausgestattet. Die Versorgung des Reformers 3 mit Kraftstoff erfolgt über eine Kraftstoffzuführungsleitung 36, die an den Kraftstoffeingang 13 angeschlossen ist und in der eine Pumpe 37 angeordnet sein kann. Der Katalysatorabschnitt 35 grenzt unmittelbar an den Gemischbildungsabschnitt 34 an und dient zur Erzeugung des Brenngases aus dem Gemisch. Hierzu enthält der Katalysatorabschnitt 35 beispielsweise einen entsprechenden Katalysator, der in einem entsprechenden Temperaturbereich und bei einem fetten Gemisch aus Oxidatorgas und Kraftstoff eine partielle Oxidation durchführt, die zum gewünschten wasserstoffhaltigen Reformat oder Brenngas führt.

In den Figuren 1 und 2 sind außerdem Temperatursensoren 38 angedeutet, die stromab des Gemischbildungsabschnitts 34, des Katalysatorabschnitts 35 bzw. des Restgasbrenners 4 angeordnet sein können und mit denen der Brennstoffzellenprozess gesteuert wird.

## Patentansprüche

1. Brennstoffzellensystem, insbesondere für ein Kraftfahrzeug,
- mit einer Brennstoffzelle (2) zur Stromerzeugung aus Brenngas und Oxidatorgas, die einen Anodeneingang (8), einen Kathodeneingang (10), einen Anodenausgang (9), einen Kathodenausgang (11) und wenigstens einen Stromanschluss (12) aufweist,
- mit einem Reformer (3) zur Brenngaserzeugung aus Kraftstoff und Oxidatorgas, der einen Kraftstoffeingang (13), einen Oxidatoreingang (14) und einen Brenngasausgang (15) aufweist,
- mit einer ersten Oxidatorleitung (21) zur Versorgung der Brennstoffzelle (2) mit Oxidatorgas, die mit dem Kathodeneingang (10) der Brennstoffzelle (2) verbunden ist,
- mit einer zweiten Oxidatorleitung (22) zur Versorgung des Reformers (3) mit Oxidatorgas, die mit dem Oxidatoreingang (14) des Reformers (3) verbunden ist,
- mit einer Brennstoffzellenabgasleitung (20), die über eine Anodenabgasleitung (17) an den Anodenausgang (9) und über eine Kathodenabgasleitung (18) an den Kathodenausgang (11) angeschlossen ist,
- mit einem Restgasbrenner (4) zum Verbrennen eines Gemischs aus Anodenabgas und Kathodenabgas, der an die Brennstoffzellenabgasleitung (20), an die Anodenabgasleitung (17) und an die Kathodenabgasleitung (18) angeschlossen ist,
- mit einem ersten Wärmeübertrager (5), der einerseits in die Brennstoffzellenabgasleitung (20) stromab des Restgasbrenners (4) und andererseits in die erste Oxidatorleitung (21) eingebunden ist,
- mit einem zweiten Wärmeübertrager (6), der einerseits in die Brennstoffzellenabgasleitung (20) und andererseits in die zweite Oxidatorleitung (22) eingebunden ist,
**dadurch gekennzeichnet,**
- **dass** der zweite Wärmeübertrager (6) stromab des ersten Wärmeübertragers (5) in die Brennstoffzellenabgasleitung (20) eingebunden ist,
- **dass** ein Rezirkulationswärmeübertrager (29) vorgesehen ist, der einerseits in die erste Oxidatorleitung (21) oder in die zweite Oxidatorleitung (22) und andererseits in eine Rückführleitung (30) eingebunden ist, die von der Anodenabgasleitung (17) abzweigt und mit einem Anodenabgaseingang (32) des Reformers (3) verbunden ist.

2. Brennstoffzellensystem nach Anspruch 1,
**dadurch gekennzeichnet,**
**dass** ein dritter Wärmeübertrager (26) vorgesehen ist, der einerseits in die Brennstoffzellenabgasleitung (20) stromab des ersten Wärmeübertragers (5) und andererseits in einen Abwärmepfad (27) zur Nutzung von im Abgas des Restgasbrenners (4) und/oder der Brennstoffzelle (2) enthaltener Wärme eingebunden ist.

3. Brennstoffzellensystem nach Anspruch 2,
**dadurch gekennzeichnet,**
- **dass** der Abwärmepfad (27) durch eine Kühlmittelleitung eines Kühlkreises einer Brennkraftmaschine des Kraftfahrzeugs gebildet ist, oder
- **dass** der Abwärmepfad (27) durch eine Warmluftleitung einer Innenraumheizeinrichtung des Kraftfahrzeugs gebildet ist.

4. Brennstoffzellensystem nach einem der Ansprüche 1 bis 3,
**dadurch gekennzeichnet,**
**dass** die Brennstoffzelle (2), der Restgasbrenner (4) und der erste Wärmeübertrager (5) innerhalb einer thermisch isolierenden Isolationsbox (28) angeordnet sind, während der zweite Wärmeübertrager (6) oder der zweite und dritte Wärmeübertrager (6, 26) außerhalb der Isolationsbox (28) angeordnet ist/sind.

5. Brennstoffzellensystem nach Anspruch 4,
**dadurch gekennzeichnet,**
**dass** der Reformer (3) innerhalb der Isolationsbox (28) angeordnet ist.

6. Brennstoffzellensystem nach Anspruch 4,
**dadurch gekennzeichnet,**
**dass** der Reformer (3) außerhalb der Isolationsbox (28) angeordnet ist.

7. Brennstoffzellensystem nach einem der Ansprüche 4 bis 6,
**dadurch gekennzeichnet,**
**dass** der Rezirkulationswärmeübertrager (29) innerhalb der Isolationsbox (28) angeordnet ist.

8. Brennstoffzellensystem nach einem der Ansprüche 1 bis 7,
**dadurch gekennzeichnet,**
**dass** der Rezirkulationswärmeübertrager (29) entweder stromauf des ersten Wärmeübertragers (5) in die erste Oxidatorleitung (21) oder stromab des zweiten Wärmeübertragers (6) in die zweite Oxidatorleitung (22) eingebunden ist.

9. Brennstoffzellensystem nach einem der Ansprüche 1 bis 8,
**dadurch gekennzeichnet,**
**dass** der Reformer (3) einen Gemischbildungsabschnitt (34) zur Bildung eines Gemischs zumindest aus Kraftstoff und Oxidatorgas und einen stromab des Gemischbildungsabschnitts (34) angeordneten Katalysatorabschnitt (35) zur Erzeugung des Brenngases aus dem Gemisch aufweist.

## Claims

1. A fuel cell system, in particular for a motor vehicle,
- with a fuel cell (2) for generating electrical power from fuel gas and oxidant gas, which fuel cell has an anode inlet (8), a cathode inlet (10), an anode outlet (9), a cathode outlet (11) and at least one power connection (12),
- with a reformer (3) for fuel gas generation from fuel and oxidant gas, which reformer has a fuel inlet (13), an oxidant inlet (14) and a fuel gas outlet (15),
- with a first oxidant line (21) for supplying the fuel cell (2) with oxidant gas, which oxidant line is connected with the cathode inlet (10) of the fuel cell (2),
- with a second oxidant line (22) for supplying the reformer (3) with oxidant gas, which second oxidant line is connected to the oxidant inlet (14) of the reformer (3),
- with a fuel cell exhaust gas line (20) which is connected via an anode exhaust gas line (17) to the anode outlet (9) and via a cathode exhaust gas line (18) to the cathode outlet (11),
- with a residual gas burner (4) for burning a mixture of anode exhaust gas and cathode exhaust gas, which residual gas burner is connected to the fuel cell exhaust gas line (20), the anode exhaust gas line (17) and the cathode exhaust gas line (18),
- with a first heat exchanger (5) which is integrated on the one side into the fuel cell exhaust gas line (20) downstream of the residual gas burner (4) and on the other side into the first oxidant line (21),
- with a second heat exchanger (6) which is integrated on one side into the fuel cell exhaust gas line (20) and on the other side into the second oxidant line (22),
**characterized in**
- **that** the second heat exchanger (6) is integrated downstream of the first heat exchanger (5) into the fuel cell exhaust gas line (20),
- **that** a recirculation heat exchanger (29) is provided which is integrated on the one side into the first oxidant line (21) or into the second oxidant line (22) and on the other side into a return line (30) which branches off the anode exhaust gas line (17) and is connected to an anode exhaust gas inlet (32) of the reformer (3).

2. The fuel cell system according to claim 1,
**characterized in**
**that** a third heat exchanger (26) is provided which is integrated on the one side into the fuel cell exhaust gas line (20) downstream of the first heat exchanger (5) and on the other side into a waste heat path (27) for utilizing heat contained in the exhaust gas of the residual gas burner (4) and/or the fuel cell (2).

3. The fuel cell system according to claim 2,
**characterized in**
- **that** the waste heat path (27) is formed by a coolant line of a cooling circuit of an internal combustion engine of the motor vehicle, or
- **that** the waste heat path (27) is formed by a hot air line of an interior heating device of the motor vehicle.

4. The fuel cell system according to any one of the claims 1 to 3,
**characterized in**
**that** the fuel cell (2), the residual gas burner (4) and the first heat exchanger (5) are arranged inside a thermally insulating insulation box (28), while the second heat exchanger (6) or the second and the third heat exchanger (6, 26) is/are arranged outside of the insulation box (28).

5. The fuel cell system according to claim 4,
**characterized in**
**that** the reformer (3) is arranged inside the insulation box (28).

6. The fuel cell system according to claim 4,
**characterized in**
**that** the reformer (3) is arranged outside of the insulation box (28).

7. The fuel cell system according to any one of the claims 4 to 6,
**characterized in**
**that** the recirculation heat exchanger (29) is arranged inside the insulation box (28).

8. The fuel cell system according to any one of the claims 1 to 7,
**characterized in**
**that** the recirculation heat exchanger (29) is integrated upstream of the first heat exchanger (5) into the first oxidant line (21) or downstream of the second heat exchanger (6) into the second oxidant line (22).

9. The fuel cell system according to any one of the claims 1 to 8,
**characterized in**
**that** the reformer (3) has a mixture forming section (34) for forming a mixture at least of fuel and oxidant gas and a catalytic section (35) arranged downstream of the mixture forming section (34) for generating the fuel gas from the mixture.

## Revendications

1. Système de cellule de combustible, en particulier pour un véhicule automobile, comprenant
- une cellule de combustible (2) pour la production de courant à partir de gaz combustible et de gaz oxydant, qui présente une entrée d'anode (8), une entrée de cathode (10), une sortie d'anode (9), une sortie de cathode (11) et au moins un branchement électrique (12),
- un reformeur (3) pour la production de gaz combustible à partir de carburant et de gaz oxydant, qui présente une entrée de carburant (13), une entrée d'oxydant (14) et une sortie de gaz combustible (15),
- une première conduite d'oxydant (21) pour l'alimentation de la cellule de combustible (2) avec du gaz oxydant, qui est reliée à l'entrée de cathode (10) de la cellule de combustible (2),
- une seconde conduite d'oxydant (22) pour l'alimentation du reformeur (3) avec du gaz oxydant, qui est reliée à l'entrée d'oxydant (14) du reformeur (3),
- une conduite de gaz brûlés de cellule de combustible (20), qui est raccordée par une conduite de gaz brûlés d'anode (17) à la sortie d'anode (9) et par une conduite de gaz brûlés de cathode (18) à la sortie de cathode (11),
- un brûleur de gaz résiduel (4) pour la combustion d'un mélange de gaz brûlés d'anode et de gaz brûlés de cathode, qui est raccordé à la conduite de gaz brûlés de cellule de combustible (20), à la conduite de gaz brûlés d'anode (17) et à la conduite de gaz brûlés de cathode (18),
- un premier échangeur de chaleur (5), qui est intégré d'une part dans la conduite de gaz brûlés de cellule de combustible (20) en aval du brûleur de gaz résiduel (4) et d'autre part dans la première conduite d'oxydant (21),
- un second échangeur de chaleur (6), qui est intégré d'une part dans la conduite de gaz brûlés de cellule de combustible (20) et d'autre part dans la seconde conduite d'oxydant (22),
**caractérisé en ce que**
- le second échangeur de chaleur (6) est intégré en aval du premier échangeur de chaleur (5) dans la conduite de gaz brûlés de cellule de combustible (20),
- **en ce qu'**un échangeur de chaleur de recirculation (29) est prévu, lequel est intégré d'une part dans la première conduite d'oxydant (21) ou dans la seconde conduite d'oxydant (22) et d'autre part dans une conduite de recyclage (30), qui dévie de la conduite de gaz brûlés d'anode (17) et est reliée à une entrée de gaz brûlés d'anode (32) du reformeur (3).

2. Système de cellule de combustible selon la revendication 1,
**caractérisé en ce**
**qu'**un troisième échangeur de chaleur (26) est prévu, qui est intégré d'une part dans la conduite de gaz brûlés de cellule de combustible (20) en aval du premier échangeur de chaleur (5) et d'autre part dans un chemin de chaleur évacuée (27) pour l'utilisation de chaleur contenue dans les gaz brûlés du brûleur de gaz résiduel (4) et/ou de la cellule de combustible (2).

3. Système de cellule de combustible selon la revendication 2,
**caractérisé en ce que**
- le chemin de chaleur évacuée (27) est formé par une conduite de réfrigérant d'un circuit refroidisseur d'un moteur à combustion interne du véhicule, ou
- **en ce que** le chemin de chaleur évacuée (27) est formé par une conduite d'air chaud d'un dispositif de chauffage d'habitacle du véhicule.

4. Système de cellule de combustible selon l'une quelconque des revendications 1 à 3,
**caractérisé en ce que**
la cellule de combustible (2), le brûleur de gaz résiduel (4) et le premier échangeur de chaleur (5) sont disposés à l'intérieur d'un boîtier d'isolation (28) isolant thermiquement, alors que le second échangeur de chaleur (6) ou le second et le troisième échangeur de chaleur (6, 26) sont disposés à l'extérieur du boîtier d'isolation (28).

5. Système de cellule de combustible selon la revendication 4,
**caractérisé en ce que**
le reformeur (3) est disposé à l'intérieur du boîtier d'isolation (28).

6. Système de cellule de combustible selon la revendication 4,
**caractérisé en ce que**
le reformeur (3) est disposé à l'extérieur du boîtier d'isolation (28).

7. Système de cellule de combustible selon l'une quelconque des revendications 4 à 6,
**caractérisé en ce que**
l'échangeur de chaleur de recirculation (29) est disposé à l'intérieur du boîtier d'isolation (28).

8. Système de cellule de combustible selon l'une quelconque des revendications 1 à 7,
**caractérisé en ce que**
l'échangeur de chaleur de recirculation (29) est intégré soit en amont du premier échangeur de chaleur (5) dans la première conduite d'oxydant (21) soit en aval du second échangeur de chaleur (6) dans la seconde conduite d'oxydant (22).

9. Système de cellule de combustible selon l'une quelconque des revendications 1 à 8,
**caractérisé en ce que**
le reformeur (3) présente une partie de formation de mélange (34) pour la formation d'un mélange au moins de carburant et de gaz oxydant et une partie de catalyseur (35) disposée en aval de la partie de formation de mélange (34) pour générer le gaz combustible à partir du mélange.
